**Europäisches Patentamt**

**European Patent Office**

**Office européen des brevets**

(19)

(11) **EP 0 923 684 B1**

(12) **EUROPÄISCHE PATENTSCHRIFT**

(45) Veröffentlichungstag und Bekanntmachung des Hinweises auf die Patenterteilung:
**06.06.2001 Patentblatt 2001/23**

(21) Anmeldenummer: **97942771.3**

(22) Anmeldetag: **02.09.1997**

(51) Int Cl.⁷: **F16F 15/00**

(86) Internationale Anmeldenummer:
**PCT/DE97/01917**

(87) Internationale Veröffentlichungsnummer:
**WO 98/11362 (19.03.1998 Gazette 1998/11)**

(54) **FEDERANORDNUNG ZUR LAGERUNG EINES AN EINEM TRÄGERTEIL BEFESTIGTEN VIBRATIONS- ODER STOSSEMPFINDLICHEN GERÄTES IN EINEM GEHÄUSE**

SPRING ARRANGEMENT FOR MOUNTING A VIBRATION- OR SHOCK-SENSITIVE APPARATUS SECURED TO A SUPPORT IN A HOUSING

DISPOSITIF A RESSORT POUR LE POSITIONNEMENT, DANS UN BOITIER, D'UN APPAREIL SENSIBLE AUX VIBRATIONS ET AUX CHOCS FIXE SUR UN SUPPORT

(84) Benannte Vertragsstaaten:
**DE FR GB IT**

(30) Priorität: **09.09.1996 DE 19636496**

(43) Veröffentlichungstag der Anmeldung:
**23.06.1999 Patentblatt 1999/25**

(73) Patentinhaber: **ROBERT BOSCH GMBH**
**70442 Stuttgart (DE)**

(72) Erfinder:
• **BECKER, Volker**
**D-31139 Hildesheim (DE)**
• **HERMANNS, Ingo**
**D-31134 Hildesheim (DE)**
• **KOERTJE, Frank**
**D-31191 Algermissen (DE)**
• **WESTENDORF, Thomas**
**D-31177 Harsum (DE)**
• **ZIMMERMANN, Holger**
**D-31141 Hildesheim (DE)**
• **REPPER, Wilfried**
**D-30173 Hannover (DE)**

(56) Entgegenhaltungen:
DE-B- 1 252 785        FR-A- 1 115 329
GB-A- 571 026         GB-A- 1 157 964
GB-A- 2 176 870       US-A- 4 402 483
US-A- 5 366 200

• **PATENT ABSTRACTS OF JAPAN vol. 012, no. 302 (M-732), 17.August 1988 & JP 63 076932 A (KAJIMA CORP), 7.April 1988,**

## Beschreibung

Stand der Technik

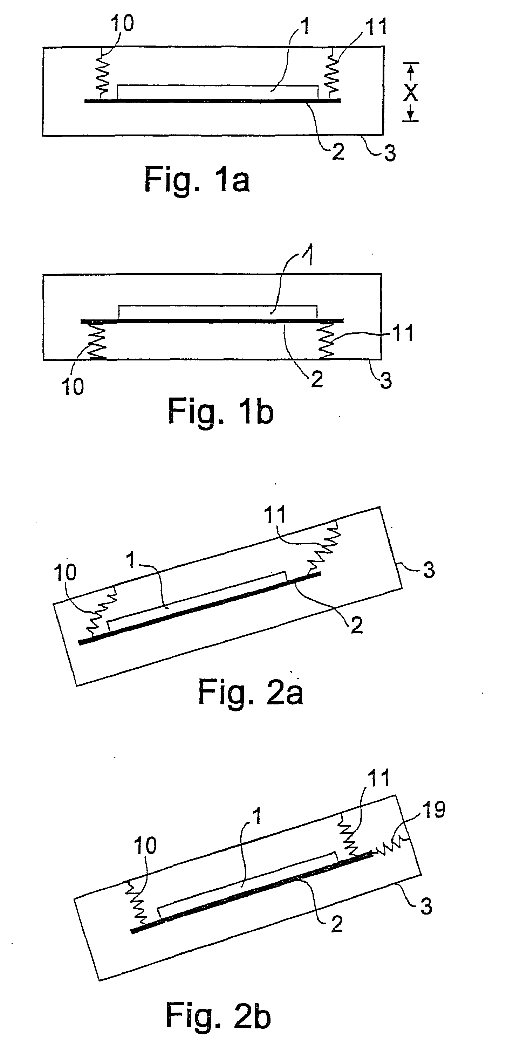

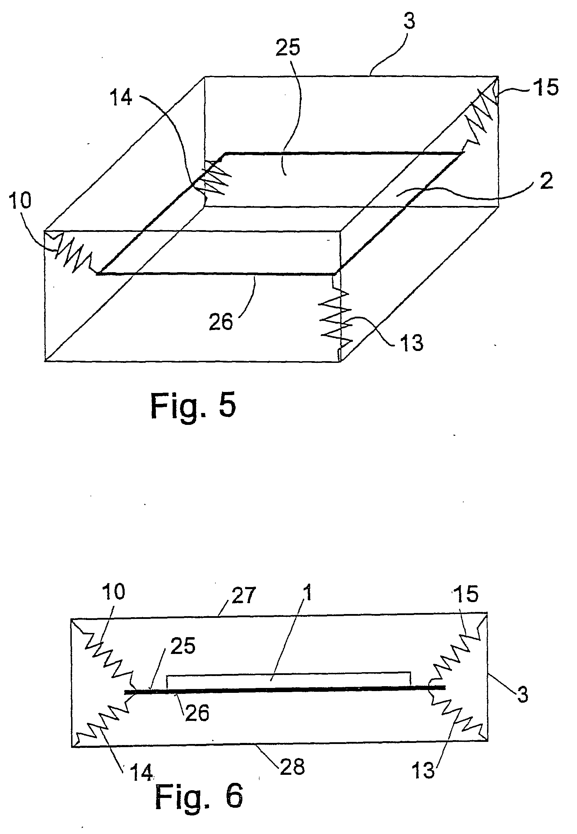

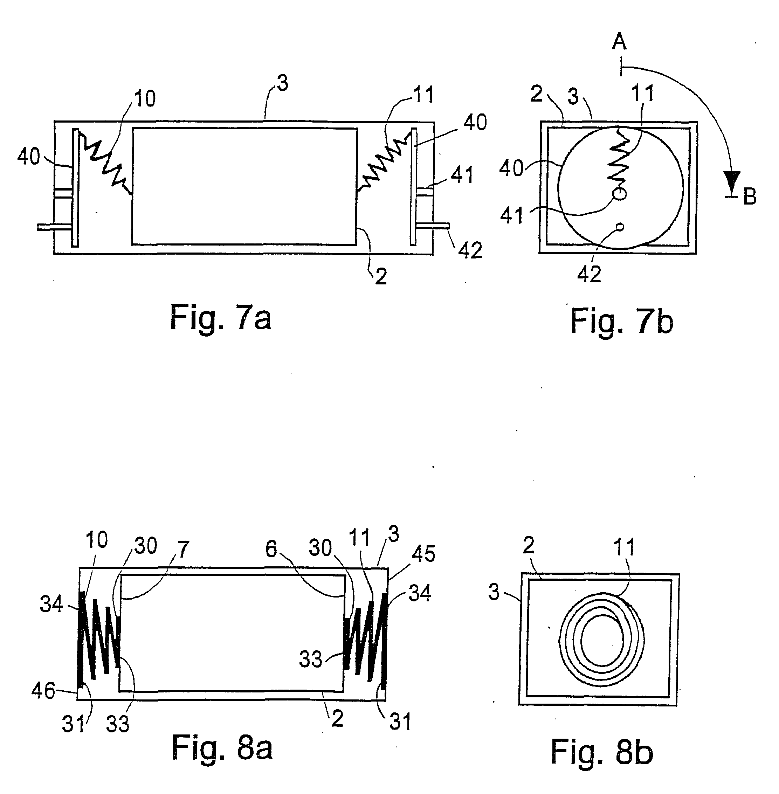

Die Erfindung bezieht sich auf eine Federanordnung gemäß dem Oberbegriff des Anspruchs 1. Es ist bereits bekannt ein vibrations- oder stoßempfindliches Gerät, wie z.B. einen Plattenspieler, ein CD-Plattenlaufwerk (Compact Disc Player), einen CD-Wechsler (CD-Changer) oder ein Disketten- oder Festplattenlaufwerk, an einem Trägerteil zu befestigen und das Trägerteil über Spiralfederelemente in einem Gehäuse schwingungsgedämpft zu lagern. Vibrations- und stoßarme Befestigungen von CD-Laufwerken sind insbesondere in Kraftfahrzeugen für einen störungsfreien Betrieb erforderlich. Deshalb wird das Gerät an dem fest im Kraftfahrzeug eingebauten Gerätegehäuse elastisch aufgehängt, wobei das Trägerteil über mehrere entweder als Zugfedern oder als Druckfedern vorgesehene Spiralfederelemente mit dem Gehäuse verbunden ist. Die Fig. la zeigt die bekannte Federanordnung mit Zugfedern und Fig. 1b mit Druckfedern. In Fig. 1a ist ein plattenförmiges Trägerteil 2, auf dessen Oberseite sich beispielsweise ein CD-Laufwerk 1 befindet, über insgesamt vier Spiralfedern (10,11), von denen nur zwei dargestellt sind, an der Oberseite eines quaderförmigen Gehäuses 3 befestigt. Durch die Anordnung wird erreicht, daß eine auf das Gehäuse 3 einwirkende Erregung nur zu einer stark abgeschwächten Beschleunigung des Laufwerks 1 führt. Bei einer derartigen Aufhängung bilden sich Resonanzstellen aus, die bei einer kleinen Anregungsfrequenz mit einer unerwünschten, starken Schwingung des Gerätes 1 verbunden sind, infolgedessen das Gerät 1 am Gehäuse 3 anstößt. Zur Vermeidung dieses Nachteils ist es wünschenswert, die Eigenfrequenz $\omega_{max}$ des schwingungsfähigen Systems zu erhöhen, da dann im Anregungsfall das Laufwerks 1 wesentlich schwächer beschleunigt wird. Dies kann bei vorgegebener Masse M gemäß Gleichung (1) nur durch eine Erhöhung der Federsteifigkeit K erreicht werden.

$$\omega_{max} = \sqrt{\frac{K}{M}} \qquad (1)$$

Andererseits muß die in Fig. la an den Federn 10,11 aufgehängte Trägerplatte durch ihre Gewichtskraft so weit ausgelenkt werden, daß sie sich etwa in der Mitte des dafür vorgesehenen freien Schwingraumes befindet, dessen Höhe in Fig. la mit x bezeichnet ist. Dies läßt sich durch eine Verringerung der Federsteifigkeit erreichen, die nach Gleichung (1) aber wegen der damit verbundenen unerwünschten Verkleinerung der Eigenfrequenz vermieden werden sollte. Die Federanordnung nach Fig. 1a und Fig. 1b besitzen weiterhin den Nachteil, daß sie nur in solchen Fällen verwandt werden können, in denen die Feder axial, also in Federachsenrichtung belastet wird. Bei einer radial einwirkenden Kraft sind die Federn jedoch stärker nachgiebig. Die Federn werden dabei kaum gedehnt, sondern im wesentlichen nur geschwenkt oder umgebogen. In radialer Richtung wirken daher nur geringe Rückstellkräfte. Radial gerichtete Kräfte wirken auf die Federn ein, wenn das Gerät in einer von der vorgegebenen Einbaulage abweichenden Richtung in das Kraftfahrzeug eingebaut wird. Ein derartiger Fall ist in Fig. 2a dargestellt. Bei einer Verkippung des Gerätes 3 wird das Trägerteil 2 durch seine Gewichtskraft seitlich stark ausgelenkt, wodurch sich der freie Schwingraum verkleinert. Im Falle einer Vibrations- oder Stoßanregung besteht die Gefahr des Anschlagens an den Seitenwänden des Gehäuses. Die Verwendung einer Federanordnung, wie sie in Fig. 1 dargestellt ist, ist daher auf solche Fälle beschränkt, in denen das Plattenlaufwerk auf eine vorgegebene Einbaulage hin fest ausgelegt wird, also z.B. nur horizontal oder nur vertikal im Kraftfahrzeug eingebaut werden kann. CD-Laufwerke in Autoradiogeräten sollen oft schräg in entsprechende Konsolen eingebaut werden. Wird das Laufwerkgehäuse zum Beispiel an der Dachkonstruktion eines Busses befestigt, ist ein bestimmter Neigungswinkel wünschenswert, um das Einsetzen der CD's zu erleichtern. Der Stand der Technik sieht in solchen Fällen vor, das Trägerteil 2 mit einer zusätzlichen auf den Neigungswinkel abgestimmten Feder 19 am Gehäuse 3 zu befestigen. Nachteilig ist auch hier, daß das Laufwerk in keiner anderen als der vorbestimmten Lage in das Kraftfahrzeug eingebaut werden kann. Deshalb findet man bei manchen Geräten eine Umstellmechanik, mit deren Hilfe zum Beispiel ein CD-Wechsler in bestimmten Grenzen an die jeweilige Einbaulage angepaßt werden kann. Dieser bekannte Stand der Technik ist in Fig. 7a und Fig. 7b dargestellt. Fig. 7a zeigt das Gerät mit seinem Gehäuse 3 zunächst in horizontaler Einbaulage. Der nicht gezeigte CD-Wechsler ist an einem Trägerteil 2 befestigt, welches über zwei Federn 10 und 11 an zwei Scheiben 40 aufgehängt ist, so daß sich das Trägerteil 2 etwa in der Mitte des dafür vorgesehenen freien Schwingraumes befindet. Die Scheiben 40 sind mit jeweils einer Achse 41 drehbar an den Seitenwänden des Gerätegehäuses 3 befestigt. Bei horizontaler Einbaulage befinden sich die Federn 10 und 11 in der Position A der Fig. 7b. Soll das gleiche Gerät nun in einer vertikalen Lage in das Kraftfahrzeug eingebaut werden, so werden nach einer Drehung des Gehäuses 3 um 90 Grad die beiden Scheiben 40 an dem Betätigungsmittel 42 in entgegengesetzter Richtung um 90 Grad gedreht, bis sich die Federn 10 und 11 in Fig. 7b in der Position B befinden, und anschließend arretiert. Die Gewichtskraft des Trägerteils 2 mit dem darauf angeordneten Gerät wird nun wieder durch die Spannkraft der Federn 10 und 11 kompensiert, so daß das Trägerteil in dem Gehäuse auch bei vertikalem Einbau frei schwingen kann. Auch beliebige Zwischenlagen zwischen 0 und 90 Grad können eingestellt werden. Nachteilig bei diesem Stand der Technik ist, daß eine teure Umstellmechanik erforderlich ist, welche die Herstellungskosten des Gerätes erhöht. Außerdem ist eine relativ aufwendige Anpassung der Umstellmechanik auf die unterschiedlichen Einbaulagen erforderlich, wobei das Gerät nur um eine Achse, welche parallel zu den Achsen 41 verläuft geneigt werden kann.

Darüber hinaus ist aus der FR-A-1 115 329 eine Federanordnung zur Lagerung eines an einem Trägerteil befestigten vibrations- oder stoßempfindlichen Gerätes in einem Gehäuse bekannt geworden, welches Trägerteil als Trägerplatte mit einer Oberseite und einer Unterseite versehen ist und über Schraubenfederelemente in dem Gehäuse derart eingespannt ist, daß jeder an dem Trägerteil angreifenden, in einer bestimmten Richtung wirkenden Spannkraftkomponente einer Feder wenigstens eine in die entgegengesetzte Richtung wirkende Spannkraftkomponente einer anderen Feder entgegenwirkt, wobei die Enden der Schraubenfederelemente notwendiger weise in Form von Befestigungsmitteln ausgebildet sind und die Trägerplatte durch die Schraubenfederelemente in etwa gleichem Abstand zwischen einem ersten und einem zweiten Gehäuseteil des Gehäuses gehalten wird. Zur Lagerung des vibrationsempfindlichen Gerätes werden vier fest miteinander verbundene Gehäusewürfel verwandt, wobei jeder Würfel wenigstens acht Federelemente aufweist. Das Gerät wird an den vier Trägerplatten der vier Gehäusewürfel befestigt. Insgesamt sind für die Federanordnung 32 Federelemente erforderlich, wobei für jede in Richtung einer Raumdiagonalen eines Kubus wirkenden Stoßrichtung immer vier nachgiebige Federverbindungen benötigt werden (eine in jedem Gehäusewürfel) und jede Federverbindung wiederum zwei Federelemente umfaßt; insgesamt also 8 Federn für jeder der vier möglichen Raumdiagonalen. Die große Anzahl der Federelemente stellt einen erheblichen Aufwand bei der Fertigung der Anordnung dar. Außerdem werden hierdurch die Kosten stark erhöht.

Aufgabe der Erfindung ist es, ausgehend von der FR-A-1 115 329, eine Federanordnung zu schaffen, welche mit deutlich weniger Federelementen auskommt und gleichzeitig dennoch ermöglicht, ein Trägerteil in einer vorgegebenen Position in dem Gehäuse einzuspannen, so daß jeder in einer bestimmten Richtung wirkenden Spannkraftkomponente dabei immer eine Spannkraftkomponente in entgegengesetzter Richtung entgegenwirkt und die Steifigkeit der einzelnen Federn vergrößert und die Eigenfrequenz des Systems erhöht werden kann.

Vorteile der Erfindung

Diese Aufgabe wird durch die erfindungsgemäße Federanordnung mit dem kennzeichnenden Merkmalen des Anspruchs 1 gelöst. Die Federanordnung nach dem Anspruch 1 kommt mit nur 4 Federelementen aus, die als preiswerte Zugfedern ausgebildet sind. Für jede Raumdiagonale ist dabei lediglich ein einzelnes Federelement vorgesehen. Die Produktionskosten können durch die Einsparung von Federelementen gesenkt werden.

Die vier Zugfedern können mit ihren Enden an dem Trägerteil und dem Gehäuse in einfacher Weise befestigt und wieder gelöst werden, so daß der Montageaufwand insgesamt deutlich reduziert wird.

Weitere vorteilhafte Ausgestaltungen und Weiterbildungen der Erfindung werden durch die in den Unteransprüchen angegebenen Merkmale ermöglicht. So wird die Federanordnung vorteilhaft so ausgelegt, daß das Trägerteil etwa in der Mitte des freien Schwingraumes angeordnet ist. Ein Anstoßen an das Gehäuse bei größeren Schwingungsamplituden wird dadurch vermieden.

Besonders vorteilhaft ist, die Trägerplatte durch vier schräg davon abstehende und von der Platte wegweisende Zugfedern im Gehäuse einzuspannen. Ein Einbau des Gerätes in einer geneigten Lage ist dann mit einer noch stärkeren Dehnung der Federn und daraus resultierenden Rückstellkräften verbunden.

Darüber hinaus wird, ausgehend von der FR-A-1 115 329, die Aufgabe auch durch eine erfindungsgemäße Federanordnung mit den kennzeichnenden Merkmalen des Anspruchs 4 gelöst, welche mit nur zwei Federelementen auskommt. In solchen Fällen, bei denen das vibrationsempfindliche Gerät an einem quaderförmigen Trägerteil befestigt wird, wie dies beispielsweise bei einem CD-Wechsler der Fall ist, ist es vorteilhaft, das quaderförmige Trägerteil über zwei kegelstumpfförmige Federn zwischen zwei gegenüberliegenden Seitenwänden des Gehäuses einzuspannen. Dabei nehmen die erste und letzte Windung der kegelstumpfförmigen Feder nicht an der Federung teil und sind vorteilhaft in jeweils einem flach auf den Seitenwänden aufliegenden Anbindungsbereich mit den Seitenwänden fest verbunden. Die kegelstumpfförmigen Federn ermöglichen eine besonders platzsparende und preiswerte Lagerung des Trägerteils in dem Gehäuse.

Zeichnungen

Ausführungsbeispiele der Erfindung sind in den Zeichnungen dargestellt und werden in der nachfolgenden Beschreibung näher erläutert. Zunächst zeigt

Fig. 1a eine Federanordnung nach dem Stand der Technik mit einem an Zugfedern aufgehängten Trägerteil,
Fig. 1b eine zweite Federanordnung nach dem Stand der Technik, wobei das Trägerteil auf Druckfedern aufgesetzt ist,
Fig. 2a die Federanordnung aus Fig. 1a bei einer Verkippung des Gerätegehäuses,
Fig. 2b die Federanordnung aus Fig. 2a mit einer auf den Kippwinkel abgestimmten zusätzlichen Feder,
Fig. 5 ein erstes Ausführungsbeispiel der erfindungsgemäßen Federanordnung für ein CD-Laufwerk,
Fig. 6 eine Seitenansicht von Fig. 5,
Fig. 7a einen schematischen Querschnitt durch ein an zwei Federn aufgehängten CD-Wechsler nach dem Stand der Technik,
Fig. 7b eine Seitenansicht von Fig. 7a,
Fig. 8a einen schematischen Querschnitt durch ein erfindungsgemäßes Ausführungsbeispiel der Federanordnung für einen CD-Wechsler und
Fig. 8b eine Seitenansicht von Fig. 8a.

Beschreibung der Ausführungsbeispiele

In Fig. 5 ist ein erstes Ausführungsbeispiel der erfindungsgemäßen Federanordnung in perspektivischer Darstellung gezeigt. Fig. 6 zeigt eine Seitenansicht von Fig. 5. Das vibrations- oder stoßempfindliche Gerät 1 in dem hier gezeigten Ausführungsbeispiel ist ein CD-Laufwerk. Das CD-Laufwerk 1 befindet sich auf der Oberseite 25 einer rechteckigen Trägerplatte 2. Das Gehäuse 3 ist hier in einer horizontalen Einbaulage gezeigt. Die Trägerplatte 2 ist mit vier als Zugfedern ausgebildeten Spiralfederelementen 10,13,14,15 in einem quaderförmigen Gehäuse 3 eingespannt. An zwei sich diagonal gegenüberliegenden Eckbereichen der Trägerplatte 2 sind Federn 10 und 15 an der Trägerplatte befestigt. Die Federn 10,15 stehen schräg von der Oberseite 25 nach außen ab und sind mit ihren anderen Enden an zwei an der Oberseite 27 des Gehäuses 3 sich diagonal gegenüberliegenden Ecken mit dem Gehäuse 3 verbunden. Die anderen beiden Eckbereiche der Trägerplatte 2 sind in gleicher Weise über Federn 13 und 14 mit zwei anderen auf der Unterseite 28 des Gehäuses 3 sich diagonal gegenüberliegenden Ecken verbunden. Mit der dargestellten Anordnung wirken unabhängig von der Einbaulage einer beliebigen Auslenkung der Trägerplatte entsprechende Rückstellkräfte entgegen. Die verwandten Zugfedern bestehen aus einem schraubenförmig gewickelten Draht und weisen Enden auf, die in Form von Ösen ausgestaltet sind. Die Zugfedern erlauben einen einfachen Ein- und Ausbau der Trägerplatte 2. Die Ösen der Zugfedern werden in entsprechende Haken, welche in den nicht durch das Laufwerk 1 abgedeckten Eckbereichen der rechteckigen Trägerplatte 2 auf der Oberseite 25 vorgesehen sind, und in diesen gegenüberliegende Haken an der Gehäuseoberseite 27 eingehängt. Die Länge der Zugfedern ist so bemessen, daß alle an dem Gehäuse 3 befestigten Zugfedern beim Einhängen in die auf dem Trägerteil 2 angeordneten Haken gedehnt werden müssen. Nach der Befestigung aller vier Federn ist das Trägerteil 2 im Gehäuse 3 eingespannt. Da die Steifigkeit so gewählt ist, daß die auf der Oberseite vorgesehenen Federn 10,15 die Trägerplatte mit der gleichen Kraft zur Gehäuseoberseite 27 ziehen, mit der die gegenüberliegenden auf der Unterseite 26 vorgesehenen Federn 13,14 die Trägerplatte 2 zur Gehäuseunterseite 28 ziehen, kann die Steifigkeit der Federn und damit die Gesamtsteifigkeit des schwingungsfähigen Systems erhöht werden, ohne daß die Trägerplatte aus der Mitte des Schwingraumes verlagert wird. Die Trägerplatte 2 kann außer durch die Federelemente zusätzlich noch über in der Fig. 5 nicht gezeigte Schwingungsdämpfer mit dem Gehäuse 3 verbunden sein.

Darüber hinaus führt die Gewichtskraft der Trägerplatte 2 und des Gerätes 1 bei großer Federsteifigkeit nur zu einer geringen Dehnung der oberen Federn 10, 15 und einer geringen Stauchung der unteren Federn 13, 14. Der Abstand der Trägerplatte 2 von der Gehäuseoberseite 27 ist daher in dem hier gezeigten Ausführungsbeispiel etwas größer als der Abstand zur Gehäuseunterseite 28. Durch eine geringfügige Veränderung der Federlänge oder eine angepaßte Wahl der Aufhängepunkte der Federn an den Gehäuseteilen ist es möglich, die Trägerplatte 2 bei horizontaler Ausrichtung mit gleichem Abstand zur Gehäuseoberseite 27 und Gehäuseunterseite 28 genau in der Mitte des freien Schwingweges zu lagern.

Bei einer von der in Fig. 5 gezeigten horizontalen Einbaulage abweichenden, geneigten Einbaulage des Gehäuses 3 wird die Trägerplatte 2 durch eine Komponente ihrer Gewichtskraft parallel zur Gehäuseunterseite 28 ausgelenkt. Die auslenkende Gewichtskraft greift dabei als radiale Kraft an den Federn 10,13,14,15 an. Dieser Fall entspricht der in Fig. 2a für den Stand der Technik beschriebenen Situation, bei der die Federn 10,11 geschwenkt oder umgebogen wurden. Bei der erfindungsgemäßen Federanordnung der Fig. 5 müssen alle vier Federn bei einer Kippung des Gehäuses 3 gedehnt werden. Diese Dehnung ist wiederum mit einer der seitlichen Auslenkung entgegenwirkenden Rückstellkraft verbunden ist, die um so größer ist, je größer die Steifigkeit der Federn ist. Die seitliche Auslenkung ist daher wesentlich geringer als beim Stand der Technik. Ein Anstoßen des Trägerteils 2 an die Seitenwände des Gehäuses 3 wird auch unter Vibrationsbelastung oder Stößen vorteilhaft vermieden. Die vier Zugfedern 10,13,14,15 stehen vorteilhafter Weise bei einer horizontalen Einbaulage des Gerätes 3 schräg nach außen von der Oberseite 25 und der Unterseite 26 ab. Die nicht mit den Eckbereichen der rechteckigen Trägerplatte 2 verbundenen Enden der Zugfedern sind in entsprechenden Ecken des quaderförmigen Gehäuses 3 befestigt. Natürlich ist es auch möglich, die Federn nicht direkt in den Ecken des Gehäuses 3, sondern an den Seitenwänden oder entsprechenden Halteteilen eines Rahmens zu befestigen. Ebenso ist es möglich, in dem Gehäuse Befestigungselemente vorzusehen und einige Federn an den Befestigungselementen und andere Federn an den Gehäusewänden zu befestigen.

In der Fig. 8a und der Fig. 8b ist eine weiteres Ausführungsbeispiel der Erfindung dargestellt. Das nicht gezeigte vibrationsempfindliche Gerät ist hier ein CD-Wechsler, welcher in einem quaderförmigen Trägerteil 2 angeordnet ist. Das Trägerteil 2 weist wenigstens zwei Seitenwände 6 und 7 auf, welche über Spiralfederelemente 10 und 11 mit dem Gehäuse 3 verbunden sind. Als Spiralfederelemente 10,11 sind an sich bekannte kegelstumpfförmige Federn vorgesehen, deren Innenwindungen in Form einer Spirale ineinanderliegen, wenn die Feder ganz zusammengedrückt wird, so daß die Höhe der Feder in diesem Fall dem Durchmesser einer einzelnen Windung entspricht. Kegelstumpfförmige Federn besitzen den Vorteil einer geringen Bauhöhe. Die kegelstumpfförmigen Federn können als Draht- oder als Bandfedern ausgebildet sein. Weiterhin können die Federn 10 und 11 als Zug- oder als Druckfedern vorgesehen sein. In dem in den Fig. 8a, 8b gezeigten Ausführungsbeispiel sind die Federn 10,11 als Zugfedern ausgelegt. Die Federn weisen an ihren Enden zwei tote Windungen 30 und 31 auf, die nicht an der Federung teilnehmen. Die Endwindung 30 der Feder 10 ist mit der Seitenwand 7 des Trägerteils 2 in einem flach auf der Seitenwand 7 aufliegenden Anbindungsbereich 33 durchgängig verbunden. Die Endwindung 31, welche den größten Durchmesser aufweist, ist mit der gegenüberliegenden Seitenwand 46 des Gehäuses 3 in einem Anbindungsbereich 34 durchgängig verbunden. Die Feder 11 ist in entsprechender Weise mit der Seitenwand 6 des Trägerteils und der der Seitenwand 46 des Gehäuses 3 gegenüberliegenden Seitenwand 45 verbunden. Durch die Art der Anbindung wird bei einer Anordnung mit nur zwei Federn erreicht, daß Umfangskräften, welche aus einer Drehung des Trägerteils 2 um die Achsen der Federn 10, 11 resultieren und zu einer Torsion der Federn 10,11 führen, entsprechende Rückstellkräfte entgegenwirken. Weiterhin wirkt der Zugkraft der Feder 10 die Zugkraft der Feder 11 entgegen, so daß sich das Trägerteil 2 eingespannt zwischen den kegelstumpfförmigen Federn 10 und 11 etwa in der Mitte des dafür vorgesehenen freien Schwingraumes befindet. Die Federsteifigkeit der beiden Federn ist so groß bemessen, daß die Gewichtskraft des Trägerteils 2 mit dem CD-Wechsler nur zu einer sehr kleinen vertikalen Auslenkung des Trägerteils 2 führt. Bei einer Drehung des Gehäuses 3 um eine Achse, welche durch die Längsachse der Federn 10 und 11 verläuft, wirken der Gewichtskraft des Trägerteils 2 aufgrund der Rotationssymmetrie der kegelförmigen Federn daher stets gleich große Rückstellkräfte entgegen. Bei einer Drehung um eine Achse, welche in Fig. 8a senkrecht zur Papierebene verläuft, wirken einer horizontalen Auslenkung des Trägerteils 2 im Unterschied zu dem in der Fig. 7a gezeigten Stand der Technik ebenfalls starke Rückstellkräfte entgegen, so daß das Trägerteil 2 weiterhin in etwa mittig im freien Schwingraum verbleibt.

**Patentansprüche**

1. Federanordnung zur Lagerung eines an einem Trägerteil (2) befestigten vibrations- oder stoßempfindlichen Gerätes (1) in einem Gehäuse (3), welches Trägerteil (2) als Trägerplatte mit einer Oberseite (25) und einer Unterseite (26) versehen ist und über Schraubenfederelemente in dem Gehäuse (3) derart eingespannt ist, daß jeder an dem Trägerteil (2) angreifenden, in einer bestimmten Richtung wirkenden Spannkraftkomponente einer Feder wenigstens eine in die entgegengesetzte Richtung wirkende Spannkraftkomponente einer anderen Feder entgegenwirkt, und wobei die Enden der Schraubenfederelemente in Form von Ösen, Haken oder entsprechenden Befestigungsmitteln ausgebildet sind und wobei die Trägerplatte (2) durch die Schraubenfederelemente in etwa gleichem Abstand zwischen einem ersten und einem zweiten Gehäuseteil des Gehäuses (3) gehalten wird, **dadurch gekennzeichnet**, daß die Trägerplatte (2) mit ausschließlich vier Zugfedern in dem Gehäuse gelagert ist, von denen zwei Zugfedern (10,15) an zwei sich diagonal gegenüberliegenden Eckbereichen der Trägerplatte (2) von der Oberseite (25) abstehen und an wenigstens dem einen ersten Gehäuseteil befestigt sind und von denen die beiden anderen Zugfedern (13,14) an den beiden anderen sich diagonal gegenüberliegenden Eckbereichen der Trägerplatte (2) von der Unterseite (26) abstehen und an wenigstens dem einen dem einen ersten Gehäuseteil gegenüberliegenden zweiten Gehäuseteil befestigt sind.

2. Federanordnung nach Anspruch 1, **dadurch gekennzeichnet**, daß sich das Trägerteil (2) in etwa in der Mitte des dafür vorgesehenen freien Schwingraums befindet.

3. Federanordnung nach Anspruch 1, **dadurch gekennzeichnet**, daß die Trägerplatte (2) durch schräg davon abstehende, von der Trägerplatte wegweisende Zugfedern mit dem Gehäuse (3) verbunden ist.

4. Federanordnung zur Lagerung eines an einem Trägerteil (2) befestigten vibrations- oder stoßempfindlichen Gerätes (1) in einem Gehäuse (3), wobei das Trägerteil (2) über Schraubenfederelemente (10-19) in dem Gehäuse (3) derart eingespannt ist, daß jeder an dem Trägerteil (2) angreifenden, in einer bestimmten Richtung wirkenden Spannkraftkomponente einer Feder wenigstens eine in die entgegengesetzte Richtung wirkende Spannkraftkomponente einer anderen Feder entgegenwirkt, **dadurch gekennzeichnet**, daß als Federelemente wenigstens zwei in entgegengesetzte Richtungen wirkende Kegelfedern (10,11) vorgesehen sind, deren eines Ende (30) mit jeweils einer am Trägerteil (2) vorgesehenen Seitenwand (6,7) verbunden ist und deren anderes Ende (34) mit jeweils einer Seitenwand (45,46) des Gehäuses verbunden ist, und daß die Endwindungen (30,31) der Kegelfedern (10,11) als tote Windungen nicht an der Federung teilnehmen und mit der Seitenwand (6,7) des Trägerteils (2) und der Seitenwand (45,46) des Gehäuses (3) in jeweils einem flach auf den Seitenwänden aufliegenden Anbindungsbereich (33,34) verbunden sind. (Fig. 8a)

## Claims

1. Spring arrangement for mounting in a housing (3) a vibration- and/or shock-sensitive apparatus (1) fastened on a support part (2), which support part (2) is provided as a support plate with a topside (25) and an underside (26) and is clamped in the housing (3) via helical spring elements in such a way that each clamping force component of a spring, which component acts on the support part (2) in a specific direction, counteracts at least one clamping force component of another spring, which component acts in the opposite direction, the ends of the helical spring elements being constructed in the form of eyes, hooks or appropriate securing means and the support plate (2) being held by the helical spring elements at an approximately equal spacing between a first and a second housing part of the housing (3), characterized in that the support plate (2) is mounted in the housing with the aid of exclusively four tension springs, of which two tension springs (10, 15) project from the topside (25) at two diagonally opposite corner regions of the support plate (2) and are secured on at least the one first housing part, and of which the two other tension springs (13, 14) project from the underside (26) at the two other diagonally opposite corner regions of the support plate (2) and are secured on at least the one second housing part opposite the one first housing part.

2. Spring arrangement according to Claim 1, characterized in that the support part (2) is located approximately in the middle of the free vibration space provided therefor.

3. Spring arrangement according to Claim 1, characterized in that the support plate (2) is connected to the housing (3) by tension springs which project obliquely from the support plate and point away therefrom.

4. Spring arrangement for mounting in a housing (3) a vibration- and/or shock-sensitive apparatus (1) fastened on a support part (2), the support part (2) being clamped in the housing (3) via helical spring elements (10-19) in such a way that each clamping force component of a spring, which component acts on the support part (2) in a specific direction, counteracts at least one clamping force component of another spring, which component acts in the opposite direction, characterized in that provided as spring elements there are at least two volute springs (10, 11) which act in opposite directions and whose one end (30) is connected respectively to a side wall (6, 7) provided on the support part (2), and whose other end (34) is connected respectively to a side wall (45, 46) of the housing, and in that, as dead coils, the end coils (30, 31) of the volute springs (10, 11) do not participate in the spring action and are connected to the side wall (6, 7) of the support part (2) and the side wall (45, 46) of the housing (3) in a joining region (33, 34) respectively resting flat on the side walls. (Figure 8a).

## Revendications

1. Montage à ressorts pour positionner un appareil sensible aux vibrations et aux chocs (1), fixé sur un support (2) dans un boîtier (3), le support (2) étant en forme de plaque de support ayant une face supérieure (25) et une face inférieure (26) et reliée au boîtier (3) par des éléments de ressorts hélicoïdaux, pour que chaque composante de tension agissant sur le support (2) dans une certaine direction, pour un ressort, s'oppose à une composante de force de tension d'un autre ressort agissant dans la direction opposée, avec les extrémités des éléments de ressorts hélicoïdaux réalisées sous la forme d'oeillets, de crochets ou de moyens de fixation correspondants, et avec la plaque de support (2) tenue par les éléments de ressorts hélicoïdaux, sensiblement de façon équidistante entre une première et une seconde partie du boîtier (3), caractérisé en ce que
la plaque de support (2) est montée dans le boîtier par uniquement quatre ressorts de traction, dont deux ressorts de traction (10, 15) sont fixés à deux zones de coin opposées en diagonale de la plaque de support (2) et partent du côté supérieur (25) en étant fixés au moins à la première partie de boîtier, et dont les deux autres ressorts de tractions (13, 14) partent des deux autres zones de coin, opposées en diagonale de la plaque de support (2) à partir de son côté inférieur (26) et sont fixées sur au moins la seconde partie de boîtier opposée à la première partie de boîtier.

2. Montage à ressorts selon la revendication 1, caractérisé en ce que
la partie de support (2) se trouve sensiblement au milieu de l'espace d'oscillation libre qui est prévu pour elle.

3. Montage à ressorts selon la revendication 1, caractérisé en ce que
la plaque de support (2) est reliée au boîtier (3) par des ressorts de traction disposés en biais par rapport à la plaque de support et s'écartant de celle-ci.

4. Montage à ressorts pour un appareil (1) sensible aux vibrations et aux chocs, fixé sur un support (2), dans un boîtier (3),
le support (2) étant relié en tension par des éléments de ressorts hélicoïdaux (10-19) dans le boîtier (3) de façon que les composantes de force de tension agissant sur la partie de support (2) dans une direction prédéterminée, d'un ressort, soient opposées au moins à une composante de force de tension d'un autre ressort agissant dans la direction opposée,
caractérisé en ce que

- les éléments de ressorts sont constitués par au moins deux ressorts hélicoïdaux (10, 11) agissant dans deux directions opposées, une extrémité (30) des ressorts étant reliée chaque fois à une paroi latérale (6, 7) prévue sur la partie de support (2) et l'autre extrémité (34) étant reliée chaque fois à une paroi latérale (45, 46) du boîtier, et
- les spires d'extrémité (30, 31) des ressorts coniques (10, 11) ne participent pas comme spires mortes à la suspension, et sont reliées à la paroi latérale (6, 7) de la partie de support (2) et à la paroi latérale (45, 46) du boîtier (3), chaque fois dans une zone de fixation (33; 34) appliquée à plat sur les parois latérales (figure 8a).

Fig. 1a

Fig. 1b

Fig. 2a

Fig. 2b

Fig. 5

Fig. 6

Fig. 7a

Fig. 7b

Fig. 8a

Fig. 8b